(19) Europäisches Patentamt
European Patent Office
Office européen des brevets

(11) EP 1 571 602 A1

(12) EUROPEAN PATENT APPLICATION

(43) Date of publication:
07.09.2005 Bulletin 2005/36

(51) Int Cl.⁷: G07D 7/12

(21) Application number: 04254664.8

(22) Date of filing: 04.08.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 05.03.2004 US 795706

(71) Applicant: Emerald Partners Incorporated
Itasca, Illinois 60143 (US)

(72) Inventors:
• Kelly, William Frank
Naperville, IL 60540 (US)

• Kelly, Brian P.
Chicago, IL 60647 (US)
• Nyland, Jonathan W.
Barrington, IL 66010 (US)

(74) Representative: Haley, Stephen
Gill Jennings & Every,
Broadgate House,
7 Eldon Street
London EC2M 7LH (GB)

(54) **System for generating and controlling transactions relating to financial instruments**

(57) A computer system that generates and provides real time information that relates to the value of a financial instrument. The financial institute being based on a forward sale agreement and an associated stable value wrap agreement that is linked to the initial value of assets associated with the forward sale agreement.

FIG. 2

**Description**

The present invention relates to a computer-based system for generating and controlling transactions relating to financial instruments.

In recent times financial markets have moved from trading from simple financial instruments such as stocks and shares to more complex financial instruments. This change has been driven by a requirement to produce returns in unstable markets whilst also needing to meet consumer demands for stability and predictability in relation to future returns. The complexity associated with in financial products has been further increased by the fact that such products are often subjected to varying national taxation requirements and that such products are often traded across national boundaries, meaning that the taxation issues associated with them become complex. As a yet further complication, such products are also subject to legal regulation by national authorities. All of this has resulted, particularly in recent years, in the creation of financial instruments which are highly complex, both in terms of the nature of their structure due to commercial requirements and their structure due to obligations to national governments through both taxation and regulation. This means that such instruments can often be difficult to structure and monitor during their operation without the input of a considerable amount of human resources.

One example of a transaction and associated financial instrument is a stable value wrap agreement, which will be described in detail below, but the underlying principles of such an agreement are actually relatively straightforward. One party effectively agrees to make up any short fall between the final liquidation value of assets within the wrap and the initial value of such assets when the wrap agreement is undertaken. However, underlying such an agreement, even in a very simple wrap arrangement of this type, is the need to calculate the initial value of the assets, attempt to predict the volatility of such assets and thereby calculate the costs and risks associated with entering into such a wrap agreement. Such an agreement can then be complicated further if the parties to the agreement are in different jurisdictions and have different administrative and taxation requirements placed on them. Yet further complications are added by a need to monitor the value of the underlying assets on a regular basis, particularly if such monitoring needs to be carried out in real time.

Indeed, the complexity of a financial instrument such as a wrap, or forward sale agreement associated therewith, is such that manual calculation in real time would not be possible and can require complex and costly processing power to achieve acceptable results.

A more complete appreciation of the present invention and the scope thereof can be obtained from the accompanying drawings which are briefly summarized below, the following detailed description of the presently preferred embodiments of the invention and the appended claims.

Accordingly, there is a need for a system for generating and controlling transactions relating to a financial instrument, such as a wrap agreement, which can provide requested data in real time, which is simple and transparent in terms of this operation, and which is not unduly expensive in terms of its need for excessive processing power.

According to the present invention there is provided a computer system for generating and providing real space time information in relation to the value of a financial instrument, the financial instrument being based around a forward sale agreement and unassociated stable value wrap agreement linked to the initial value of assets associated with the forward sale agreement, the system comprising:

a stable value wrap provider for providing stable value wrap information at the request of a user;
a stable value wrap generator for receiving data from the stable value wrap provider and asset value data and providing an output to the stable value wrap provider based upon an assessment of the data provided thereto, and providing a further output indicative of a current book value of the assets associated with the forward sale agreement.

The present invention provides a computer system which can collate complex sets of data and assess the cost, risks and/or value to a party entering into the financial instrument as well as enabling the provision of real time value information to the parties involved in the transaction underlying instrument to provide an immediate assessment as to the progress of the transaction.

A more complete understanding of the method and apparatus of the present invention may be obtained by reference to the following detailed description when taken in conjunction with the accompanying drawings wherein:

Figure 1 is a flow diagram showing the key features of an example financial instrument of the type which can be generated and controlled by the present invention, and
Figure 2 is a schematic diagram of a system according to the present invention.

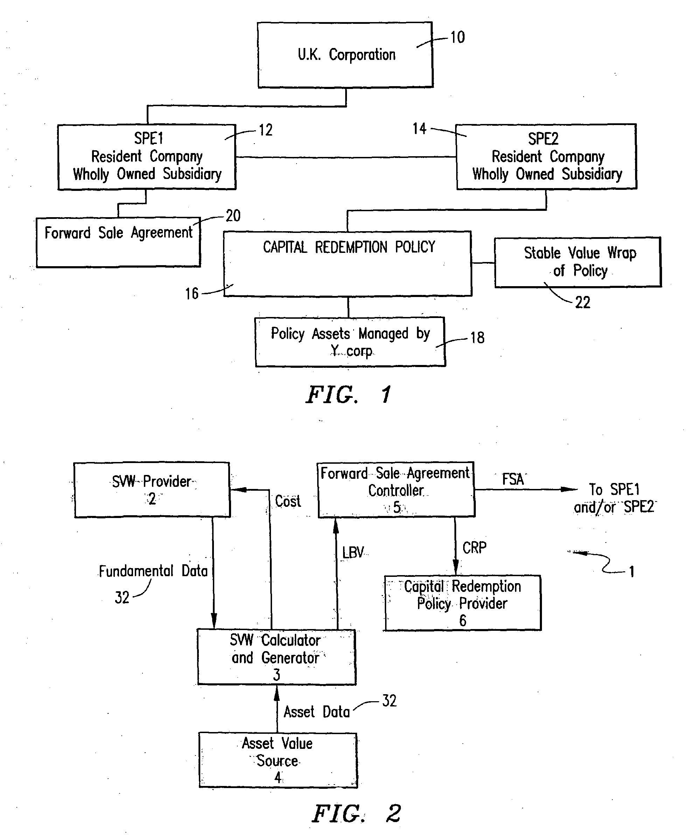

Before describing the present invention in detail it is worthwhile outlining, in general terms, the functionality of a financial instrument of the type to which it might be applied. Figure 1 shows the key components in such a financial instrument.

In the example a UK corporation 10 is used as the start point, but it will be appreciated that the invention does not just apply to UK resident corporations or financial instruments that need to be structured to meet UK regulatory and taxation requirements. In Figure 1, a UK corporation 10 has cash assets which it wishes to invest at a fixed or variable return over a period of time, again, is either fixed or variable. The UK corporation 10 wishes to invest the cash assets in a tax-efficient manner and may therefore consider placing these cash assets in a structure that involves one or more non-UK resident companies (SPE1 12 and SPE2 14). In this example, the UK corporation 10 provides a capital contribution to a non-UK resident company that is effectively a wholly owned subsidiary. This company, SPE1 12, in turn makes a capital contribution, based upon the cash assets received from the UK corporation 10, to a further company, SPE2 14, which may or may not be in the same jurisdiction as SPE1 12, and which is a wholly owned subsidiary of SPE1 12. The company SPE2 14 then invests in a capital redemption policy 16 issued by an issuance company with assets managed by a further company, Y Corporation 18. Y Corporation 18 may or may not be linked through its assets to any of the earlier companies.

In this particular structure, it is the intention of the UK corporation 10 to have a return on its assets, but also to have a guarantee that the values of the assets in the capital redemption policy 16 do not affect the underlying value of the initial injection of cash assets made to SPE1 12. Furthermore, given that the instrument is planned to have a fixed period, it also requires certainty at the beginning of the financial instrument that the cash asset can be returned at the end of the period. In order to achieve this, SPE1 12 enters into a forward sale agreement 20 agreeing to the sale of the underlying assets invested in by the cash asset injection at the end date of the instrument. The agreement may be with a third party, or in certain cases may be with Y Corporation 18 or an associated subsidiary of Y Corporation 18. The forward sale agreement 20 therefore ensures that, at an agreed date, any assets in the financial instrument will be purchased and the cash assets returned to the UK corporation 10. In order to ensure a minimum return value, which will usually be the start-out value of the cash assets provided from the UK corporation 10, a stable value wrap policy 22 is arranged between SPE 112 or SPE2 14 and either Y Corporation 18 or a third party. The stable value wrap 22 is effectively an underwritten value guarantee to ensure that SPE2 14, SPE1 12 and the UK corporation 10 have, in turn, a guaranteed underlying asset value.

Because the UK corporation 10 wishes to treat its investments effectively as cash, it may well be necessary for the UK corporation 10 to require information as to the current value of the policy assets in the capital redemption policy instantaneously at any given time during the life time of the instrument. Given this, and given that the generation of the initial financial instrument, particularly in relation to the creation of the stable value wrap policy 22 based upon knowledge of market factors, the type of investments made and life time of the instrument, it will be appreciated that there are a number of complex financial calculations that are required in order for the financial instrument to be set up and to operate efficiently.

Figure 2 shows the functional structure of a system 1 according to an embodiment of the present invention which is arranged to generate and manage a financial instrument of the type described with reference to figure 1. The system 1 may be provided by a single appropriately configured computer, or may be provided by multiple computers with appropriate communication connections between each of the functional components, with each of the individual computers being located either in the same or different places or, indeed, in different national territories. Indeed, the system 1 may be arranged so that it is actually managed by different users in different territories, with each user capable only of controlling at least the component relevant to their territory and their contribution to the overall financial instrument.

Referring to figure 2, the system 1 has a stable value wrap providing component 2 which is a communication with a stable value wrap calculator and generator 3. The stable value wrap generator 3 adapted to receive from the stable value wrap (SVW) provider 2 requests for provision of an SVW and to provide to the SVW provider 2 an indication of the charges associated with providing such an SVW. The SVW generator 3 is arranged to receive various pieces of asset data 30 from an asset value source 4. The asset data 30 may either be input manually or may be provided automatically from a capital redemption policy provider. The SVW generator 3 also receives fundamental data 32 from the provider 2 relating to the lifetime of the SVW to be generated. The SVW generator 3 receives the asset data 30 from the source 4 and sets a crediting rate (CR) based upon the underlying asset value provided by the source 4. The purpose, as explained above, of the SVW is to ensure that the current book value (CBV) of the value wrap never falls below a predetermined previous book value (PBV) in other words to ensure that the CR neverfalls below zero. This is done by the calculator 3 initially calculating a current book value (CBV) by considering the sum of the PBV and CR. It then determines the difference between a current market value (CMV) and CBV and adjusts the crediting rate based upon the formula:

$$BV = \sum \left[ \sum_{i=1}^{n} C_i / ((1 + IRR)^{1/365})^t \right]$$

where BV = book value, C is the amount of cash flow from the underlying asset, t is the time from the date when a calculation is started, and n is the total number of expected cash flows from the crediting rate reset date to the next scheduled crediting rate reset date. For example, if a four year investment pays out quarterly, n is set at any number between 0 and 16, dependent upon the date the book value is generated to provide an indication of the current book value.

In the above calculation it is necessary to either provide or determine an internal rate of return (IRR). The IRR is a discount rate, the rate at which the current present value of the investment is equal to the present value of the returns on those investments. It can be determined not only for equal, periodic investments, but for any series of investments and related returns. The IRR can be determined in a number of ways, but the system, according to an embodiment of the present invention, is beneficial in that it determines the IRR on the basis of a net present value of the assets of a particular investment. To do this effectively, the IRR can be considered to be a discount rate of return which sets the net present value (NPV) of a given cash flow to zero, so it can be defined as:

NPV(C,t,IRR) = 0, with the IRR being the selected value for a given cash flow at a given time that allows this equation to be satisfied.

In general, there is no closed form solution for the IRR. It has to be found iteratively, which means that, in practice, it cannot be calculated manually, and needs to be calculated by selecting assess value using that test value in a calculation to determine the MPV, given a particular decided cash flow and time, to see how close the value of the MPV gets to zero adjusts the value and repeat until the MPV is set to be as close to zero as is possible.

In this example of the invention the MPV is calculated by employing the formula:

$$NPV(C,t,d) = \sum_{i=0}^{N} SumC[i] / (1 + d) \wedge t[i]$$

where

C[0] is the first, C[N] is the last cash flow. d is the assumed discount rate.

T[i] is the time between the first cash flow and the i-th. Obviously, t[0]=0 and t[N]= the length of time under consideration. In this equation C[i] is the I-th cash flow

The calculator 3 also calculates a market value and determines the difference from the market value of a previous book value (PBV). If the current market value is higher than the previous book value, then the current book value is restated as the current market value, but if this is not the case then the current book value is restated as the previous book value. The value of the SVW can then be adjusted to the difference between the CBV and the PDV so that the two equate. Clearly, the calculator 3 can then indicate to a user when it is necessary to provide assets to the stable value wrap assets to ensure that the current book value and the previous book value equate when the current market value is below the previous book value.

As well as providing an indication to the stable value wrap provider 2 of the costs associated with a particular stable value wrap, the calculator 3 also provides, in real time if necessary, a current book value to a forward sale agreement controller 5. The purpose of the forward sale agreement (FSA) controller 5 is to provide an FSA value to one or more of the entities (SPE1 12 or SPE2 14) for their appropriate management. The FSA controller's other purpose is to provide control of the funds to the capital redemption policy assets by taking from the CPV any breakage fee, applying expense charges as required and then stating a forward sale value based on this data to the capital redemption policy provider 6.

By provision of a SVW calculator it is possible to generate in an informed and reliable manner a forward sales agreement which can be controlled simply and effectively. The SVW calculator 3 may also be able to provide a clear indication of the costs associated with an SVW to anybody who might wish to provide an SVW contract. Furthermore, by appropriate configuration of the calculator 3 it is possible for the SVW calculator 3 to operate in real time so that updating information, in terms of current book value, based upon underlying asset values from source 4, in real time and based upon current market conditions, so that the relevant parties can be aware of the underlying value of the instrument and the market status of the overall instrument as and when required. Furthermore, by providing such functionality it is possible for the system to operate with minimal manual input and upon a system with minimal computational requirements.

The previous description is of a preferred embodiment for implementing the invention, and the scope of the invention should not necessarily be limited by the description. The scope of the present invention is instead defined by the following claims.

**Claims**

1. A computer system for generating and providing real space time information in relation to the value of a financial instrument, the financial instrument being based around a forward sale agreement and an associated stable value wrap agreement linked to the initial value of assets associated with the forward sale agreement, the system comprising:

   a stable value wrap provider for providing stable value wrap information at the request of a user;
   a stable value wrap generator for receiving data from the stable value wrap provider and asset value data and providing an output to the stable value wrap provider based upon an assessment of the data provided thereto; said stable value wrap generator also being for providing an output indicative of a current book value of the assets associated with the forward sale agreement.

2. The computer system of claim 1, further comprising a forward sale agreement controller for receiving the current book value data from the stable value wrap calculator and providing financial data associated with a forward sale agreement to an end-user.

3. A computer system according to claim 1, wherein the stable value wrap calculator calculates a current book value (BV) on the basis of the formula

$$BV = \Sigma \left[ \sum_{i=1}^{n} C_i / ((1 + IRR)^{1/365})^t \right]$$

   where C is the amount of cash flow from the underlying asset, t is the time from when an initial calculation was made at the request of the stable value wrap provider, n is the total number of expected cash flows from a first assessment date to a subsequent scheduled assessment reset date and IRR is an internal rate of return.

4. A computer system according to claim 3, further comprising means for calculating an IRR for use by the stable value wrap calculator.

5. A computer system according to claim 1, wherein the stable wrap provider and stable wrap generator are provided by separate processors in locations remote from one another.

**FIG. 1**

**FIG. 2**

**European Patent Office**

**DECLARATION**

which under Rule 45 of the European Patent Convention shall be considered, for the purposes of subsequent proceedings, as the European search report

**Application Number**

EP 04 25 4664

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G07D7/12 |

The application relates to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-3. Amendments being limited by the original disclosure (Art. 123(2) EPC) the circumstance referred to in the general legal advice in the following paragraph cannot be anticipated to arise in the present case.

The applicant's attention is drawn to the fact that a search may be carried out during examination following a declaration of no search under Rule 45 EPC, should the problems which led to the declaration being issued be overcome (see EPC Guideline C-VI, 8.5).

-----

| Place of search | Date | Examiner |
|---|---|---|
| Munich | 9 June 2005 | Beker, H |

EPO FORM 1504 (P04C37)